# EUROPEAN PATENT SPECIFICATION

(11) **EP 0 273 640 B1**
(45) Date of publication and mention of the grant of the patent: **10.03.1993**
(21) Application number: 87311057.1
(22) Date of filing: 15.12.1987
(51) Int. Cl.: H04N 5/76, H04N 5/91, H04N 5/243

(54) **Composite camera apparatus**
Zusammengesetzte Kameraeinrichtung
Dispositif de caméra composite

(30) Priority: 27.12.1986 JP 310666/86
(43) Date of publication of application: 06.07.1988
(73) Proprietor: SONY CORPORATION, Tokyo 141 (JP); FUJI PHOTO FILM CO., LTD., Kanagawa 250-01 (JP)
(72) Inventor: Masuda, Akira c/o Patents Division, Shinagawa-ku Tokyo 141 (JP); Nakayama, Yoshiaki, Minato-ku Tokyo (JP)
(74) Representative: Cotter, Ivan John

(56) References cited:
- DE-B- 2 926 981
- US-A- 3 114 002
- US-A- 3 546 378
- US-A- 4 366 501
- US-A- 4 608 605
- US-A- 4 622 596

## Description

This invention relates to composite camera apparatus.

European Patent Application Publication No. EP-A-0 233 736 published on 26 August 1987 proposes a composite camera apparatus functioning as a film-type still camera and video camera. When it is operated as a still camera, the composite camera picks up to detects a still image of a subject and produces a still image on a photosensitive film. When it is operated as a video camera, the composite camera picks up or detects video image data to be reproduced by means of a video tape recorder (VTR).

As used herein, the term "video camera" means a camera that can pick up a video image and convert the image into a video signal that may be recorded, e.g. by means of a video tape recorder (VTR), and thereafter produced. The term "video data" is used herein to mean data picked up an image pick-up device, such as a change coupled device (CCD) image pick-up device, employed in the video camera, and the video data, when converted into an electrical signal, is referred to as a "video signal". The term "still camera" means a camera that can pick up a still image of a subject and form a still image on a still image recording medium such as a photosensitive film.

As is well known, a film type still camera for forming a still image of a subject on a photosensitive film may require a strobe device (stroboscopic flash device) for providing sufficient light intensity for picking up a still image in the dark. On the other hand, the image pick-up device employed in a video camera is of sufficiently high photosensitivity that video data can be picked up in the dark, that is in lighting conditions so dark that a film-type still camera cannot, due to lower photosensitivity, pick up a still image unless assisted by a stroboscopic flash. When stroboscopic flashing is effected, the light intensity becomes excessive for the image pick-up device of the video camera and cause smearing or blooming of the picked-up image.

An opportunity to take a still picture may arise when video data is being picked up by the video camera. In such event, the user may require simultaneous operation of the video camera and still camera even in conditions too dark for the still camera, whereby stroboscopic flashing must be effected for assisting or enabling picking up of a still image. When stroboscopic flashing is effected, at least one corresponding field of video data may receive excessive light intensity, causing smearing or blooming. Such field will be noticeable when the video signal is reproduced by means of a VTR on a video monitor, such as a cathode ray tube (CRT) screen, in that the reproduced image is degraded.

The foregoing problem may be solved or reduced by keeping the video camera lens away from the stroboscopic light source. However, this is not practical when the composite camera is to be lightweight, handy and compact for convenience of carrying.

According to the aspect of the invention there is provided a composite camera apparatus comprising:
a video camera for picking up a video image and producing therefrom a video signal comprising a plurality of fields;
a still camera for picking up a still image for recording on a still image recording medium;
a flash device cooperative with the still camera for emitting a flash of high intensity light in response to operation of the still camera; and
data modifying means incorporated in the video camera for modifying video image data in a field of the video signal picked up when the flash device is operated so as to avoid the influence of high intensity flash light.

Embodiments of the invention described hereinbelow provide such an apparatus which allows simultaneous operation without causing noticeable degradation of a video image reproduced from the video signal even when a flash is emitted while the video camera is active.

According to a second aspect of the invention there is provided a composite camera apparatus comprising a video camera device, a still camera device and a strobe flash device. The video camera device preferably includes an electrical circuit for picking up video data and processing the video data to form a video signal that is recorded on a recording medium, such as video tape. The electrical circuit of the video camera device includes data modifying means, associated with the strobe device and responsive to initiation of stroboscopic flashing, for controlling the electrical circuit for recording the video signal so that a predetermined part of the video data picked up upon the occurrence of stroboscopic flashing will not be reproduced when the video signal is reproduced by means of a VTR on a video monitor.

The data modifying means may replace the corresponding video signal field or fields converted from the picked up video data with a false or dummy signal. Alternatively, the corresponding video signal field or fields is or are inhibited from being recorded. By disabling the corresponding video signal field from being reproduced on a video monitor, smearing or blooming of the video image picked up when the stroboscopic flashing is effected become unnoticeable.

The invention will now be further described, by way of illustrative and non-limiting example, reference to the accompanying drawings, in which:
Figure 1 is a perspective view of a preferred composite camera apparatus embodying the invention, the apparatus comprising a video camera and a film-type still camera with a strobe device;
Figure 2 is a schematic block diagram of the composite camera apparatus of Figure 1;
Figures 3A, 3B and 3C are timing charts showing relationships of video signals and stroboscopic operation, Figure 3A showing the timing of operation of the strobe device, Figure 3B showing the waveform of a video signal to be recorded on a video tape as recorded by the previously proposed composite camera apparatus, and Figure 3C showing the video signal to be recorded on a video tape by the composite camera apparatus of Figures 1 and 2; and
Figures 4 to 6 are schematic diagrams showing modifications of the preferred composite camera apparatus.

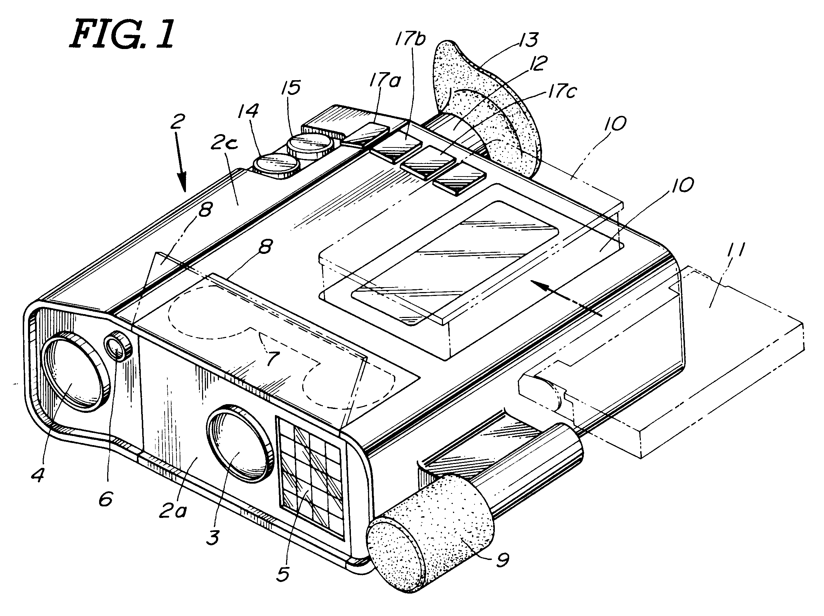

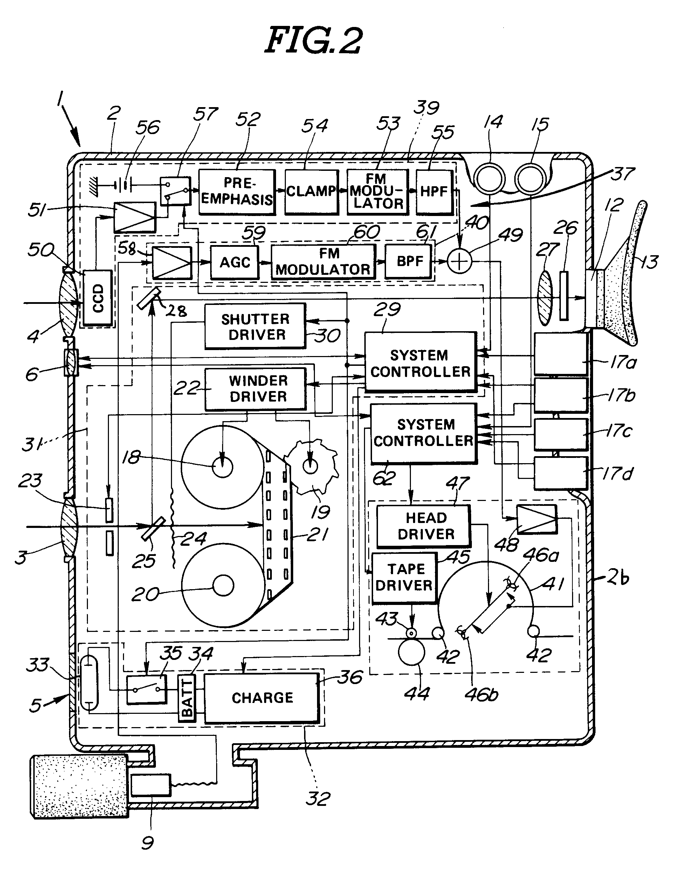

Figures 1 and 2 show a composite camera apparatus 1 according to a first embodiment of the invention, the apparatus being formed to have a light weight, handy and compact construction for convenience of hand carrying. The apparatus 1 is designed for functioning as a video camera and a film-type still camera and permits simultaneous operation of both cameras. The video camera and still camera 31 are installed in a common camera body 2. The camera body 2 has a front wall 2a, a rear wall 2b and side walls 2c (only one side wall being shown) and has a thin box-shaped configuration. A camera lens assembly 3 of the still camera (hereinafter referred to as "the still camera lens") and a camera lens assembly 4 for the video camera (hereinafter referred to as "the video camera lens") are installed on the front wall 2a.

It should be appreciated that, although the drawings do not clearly illustrate the exact construction, the still camera lens may include a known lens drive mechanism for adjusting its focal point in order to facilitate automatic focussing. Also, the video camera lens may include an automatic focussing mechanism of known construction and an automatic zooming mechanism. Such automatic focussing and automatic zooming facilities are not essential.

A strobe light emitting window 5 is provided on the front wall 2a adjacent the still camera lens 3. An optical distance sensor 6 is provided adjacent the video camera lens 4 for measuring the distance to an object for enabling automatic focussing.

A photosensitive film receptacle cavity 7 is defined adjacent the front wall 2a at a position opposing the still camera lens 3. The cavity 7 opens at one of the side walls 2c of the camera body 2 so that a photosensitive film can be inserted therein. The opening of the cavity 7 is provided with a closure lid 8 which is hinged at its front edge so that it may be hinged to an open position shown by phantom lines in Figure 1 to allow insertion and removal of the photosensitive film. Preferably, the film is in the form of film cassette or magazine, for convenience of insertion and removal of the film, although any type of film can be employed.

A microphone 9 is installed on the camera body 2 for recording audio sound for audio recording. The audio sound is recorded on a video tape together with a video signal to be reproduced therewith in a manner well known per se.

A cassette holder 10 for receiving a video tape cassette 11 is provided in one side of the camera body 2. The cassette holder 10 is movable between a retracted position and an extended release position. In the release position, the cassette holder 10 exposes a cassette receptacle space outside of the camera body 2 so that the video tape cassette 11 can be installed therein and removed therefrom. The cassette holder 10 may be pushed into the retracted position from the release position to load the video tape into a video tape recording mechanism installed in the composite camera apparatus.

A viewfinder 12 with an eye cup 13 is installed on the rear wall 2b of the camera body 2. A shutter button 14 and a record start button 15 are arranged adjacent the viewfinder 12. Function buttons 17a to 17d are arranged on the camera body 2. The button 17a is designed to be turned ON for inputting a strobe device ON-set command. That is, while the button 17a is set at the ON position, a strobe device 32 is maintained in an operative condition for emitting stroboscopic light in response to depression of the shutter button 14. The button 17b is designed for inputting an automatic focussing demand for causing an automatic focussing servo system, which may be associated with the still camera lens 3 and/or the video camera lens 4, to shift the lens position for enabling automatic focussing. The button 17c is designed for entering a white balancing command for causing a white balance circuit (not shown) in the video camera device to adjust the white balance. The button 17d, which is for date insertion, is schematically illustrated as a singular pushbutton but can be any other suitable form. A data setting arrangement of the still camera actuated by the button 17d can be of known construction and thus need not be described in detail.

A film take up spool 18 and a film supply spool 20 are installed within the film receptacle cavity 7. A film feeding sprocket 19 is provided adjacent a path of photosensitive film 21 in the cavity 7. The tape up spool 18 and the sprocket 19 are driven by a winder driver circuit or mechanism 22 in synchronism with each other. By driving the spool 18 and the sprocket 19, automatic winding of the film can be provided.

The still camera 31 includes an iris mechanism 23 and a shutter mechanism 24 positioned between the still camera lens 3 and the film 21. A half mirror 25 disposed between the iris mechanism 23 and the shutter mechanism 24 reflects part of the light entering through the still camera lens 3. The reflected light component, which contains an image of the scene or object viewed, is transferred to an imaging screen 26 via a deflector mirror 28 and an imaging lens 27 whereby the image is projected or formed on the imaging screen 26 by the imaging lens 27 and can be viewed via the viewfinder 12.

The shutter mechanism 24 is associated with a shutter driver circuit 30 which is connected to a still camera system controller 29. The system controller 29 is designed for controlling operation of the shutter mechanism 24 in response to depression or manual operation of the shutter button 14. The controller 29 controls operation of the driver circuit 22 of the automatic film winder mechanism for winding the film and thus feeding the film segments. The controller 29 may control the timing of the film winding operation of the film winder mechanism in relation to the shutter operation timing. If a cassette or magazine type film is employed, rewinding of the film may not be required. However, if a normal type of film which is wound around a spool is employed, rewinding may be performed by the film winding mechanism under control of the system controller 29 in response to a command inputted through a rewinding button.

The system controller 29 also controls operation of the strobe device 32, which comprises a stroboscopic lamp 33, a battery 34, a switch 35 and a charge circuit 36. The system controller 29 is associated with the switch 35 and the charge circuit 36 and makes the charge circuit 36 active to accumulate electric power for supplying a high voltage to the stroboscopic lamp 33 when the strobe control switch button 17a is set at its ON position. The system controller 29 turns ON the switch 35 in synchronism with operation of the shutter mechanism 24 whereby the scene or object to be photographed is illuminated with stroboscopic light via the strobe light emitting window 5.

The video camera includes a tape drive mechanism that includes a known tape loading mechanism for loading a video tape 41 of the video tape cassette 11. The loading mechanism wraps the video tape 41 onto the periphery of a rotary head drum carrying magnetic heads 46a and 46b. The tape drive mechanism also includes a capstan 43, a pinch roller 44, and guide rollers 42 to drive the tape 41 about the rotary head drum. The capstan 43 is associated with a tape driver circuit 45 to control tape drive speed, tape drive direction and so forth. The magnetic heads 46a and 46b are connected to a head driver circuit 47 for controlling recording and reproducing operation of the magnetic heads.

A video signal processing circuit 39 includes a CCD image pick-up device 50 provided behind the video camera lens 4 to receive video data of the image of an object or scene and convert the video data into a video signal. The video signal is outputted from the device 50 and processed through an amplifier 51, a pre-emphasis circuit 52, a clamping circuit 54, a frequency modulation (FM) modulator circuit 53 and a high-pass filter circuit 55. The pre-emphasis circuit 52 receives the amplified video signal and emphasises the high frequencies of the video signal so as to improve the signal to noise ratio. The clamping circuit 54 fixes the relationship between the video signal and carrier so that frequency modulation can be performed in the modulator circuit 53. The circuit 53 thus performs frequency modulation to establish a luminance signal. The luminance signal is fed to the high-pass filter circuit 55 so as to allow mixing of a chrominance signal from a chrominance signal processing system (not shown) with the luminance signal.

The microphone 9 is connected to an audio signal processing circuit 40 which includes an amplifier 58, an automatic gain control (AGC) circuit 59, an FM modulator circuit 60 and a band-pass filter 61. The filter 61 is designed to filter out the chrominance signal band and luminance signal band and pass the audio signal in a band intermediate the chrominance and luminance signal bands.

The video signal (containing the chrominance and luminance signal components) and the audio signal are mixed in a mixer 49 and fed to the magnetic heads 46a and 46b via the head driver circuit 47 and a recording amplifier 48, whereby the video signal and audio signal are recorded on the video tape 41.

A system controller 62 controls operation of the video camera. The system controller 62 is connected to the function buttons 17a, 17b, 17c and 17d to receive the function commands therefrom. The system controller 62 is also connected to the tape driver circuit 45 and the head driver circuit 47 of the video camera for controlling operation thereof. Though not shown clearly in the drawings, the system controller 62 is further connected to various components of the video and audio signal processing circuits 39, 40 described above in a manner well known per se for controlling the operation thereof. Since the circuit layout and functions of the control system for controlling the video camera circuit can be substantially the same as for known such systems, they will not be described.

The above-described composite camera apparatus embodying the invention permits simultaneous operation of the video camera and still camera. When the apparatus is active, the strobe device 32 is operated, if the function button 17a is set to the ON position, in response to depression of the shutter button 14 and in synchronism with operation of the shutter mechanism 24. The apparatus is so designed that the smearing or blooming evident, in the previously proposed apparatus, on one or several fields of the video image due to the stroboscopic light which provides an excessive light intensity for the CCD image pick-up device 50, is not noticeable when the image is reproduced on a video monitor. To this end, the apparatus is provided with a change-over switch or switch circuit 57 which is connected to the system controller 29 of the still camera. In a normal switch position, the switch 57 connects the CCD image pick-up device 50 to the remainder of the video signal processing circuit 39. The switch 57 is responsive to the strobe trigger signal (for initiating strobo-flashing of the stroboscopic lamp 33) to adopt another position (hereinafter "the strobe position") in which the remainder of the circuit 39 is connected to a dummy signal source or generator which, in this embodiment, comprises a direct current source 56, such as a battery. The direct current source 56 is so designed as to supply a direct current to the remainder of the circuit 39 as a dummy signal. The signal level of the dummy signal may be set at a lower level than a clip level so as not to make the reproduced image noticeable.

The change-over switch 57 may be so designed as to stay in the strobe position for a given period of time after having been switched into the strobe position in response to the strobe trigger signal. In practice, the switch 57 may be held in the strobe position for a period corresponding to one field of the video signal.

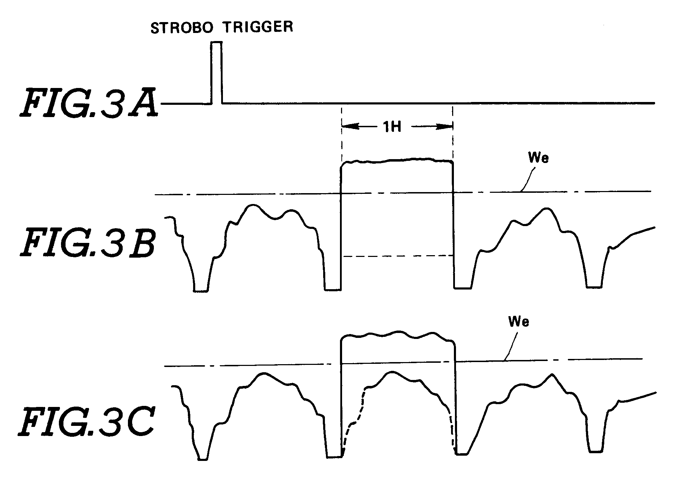

As will be seen from Figures 3A, 3B and 3C, the change-over switch 57 is, in practice, switched between the normal switch position and the strobe position in synchronism with the video signal. As can be seen from Figures 3B and 3C, if the video signal is not modified the luminance level of the video signal at the field where the stroboscopic light is emitted becomes sufficiently high to cause smearing or blooming. Therefore, according to this embodiment, the luminance level of the video signal of the field influenced by the stroboscopic light is lowered below a clip level We by modifying the video signal, as shown in Figure 3C. That is, the change-over switch 57 changes over in response to the vertical synchronisation signal occurring subsequent to occurrence of the strobe trigger signal of the system controller 29 of the still camera device, as shown in Figure 3A. This delays the change-over operation. This delay time allows picking up of the leading field of the video image occurring immediately before strobe operation.

After the period corresponding to the one field of the video signal expires, the change-over switch 57 returns to the normal switch position for connection the CCD image pick-up device 50 to the remainder of the video signal processing circuit 39. Though it may be possible to measure the period for maintaining the switch 57 in the strobe position before switching to the normal position after the one field period expires, it is convenient to switch the change-over switch from the strobe position to the normal switch position in response to receipt of a vertical synchronisation signal while the switch is in the strobe position.

By virtue of the above-described operation, it becomes possible to replace one field of video signal picked up when stroboscopic light is emitted with the dummy signal. This avoids a video image having smearing or blooming being reproduced on the video monitor. Although the one field of dummy signal will be reproduced, it will not be noticeable since the luminance level of the reproduced image is held so low as to make the reproduced image so dark as not to be noticed.

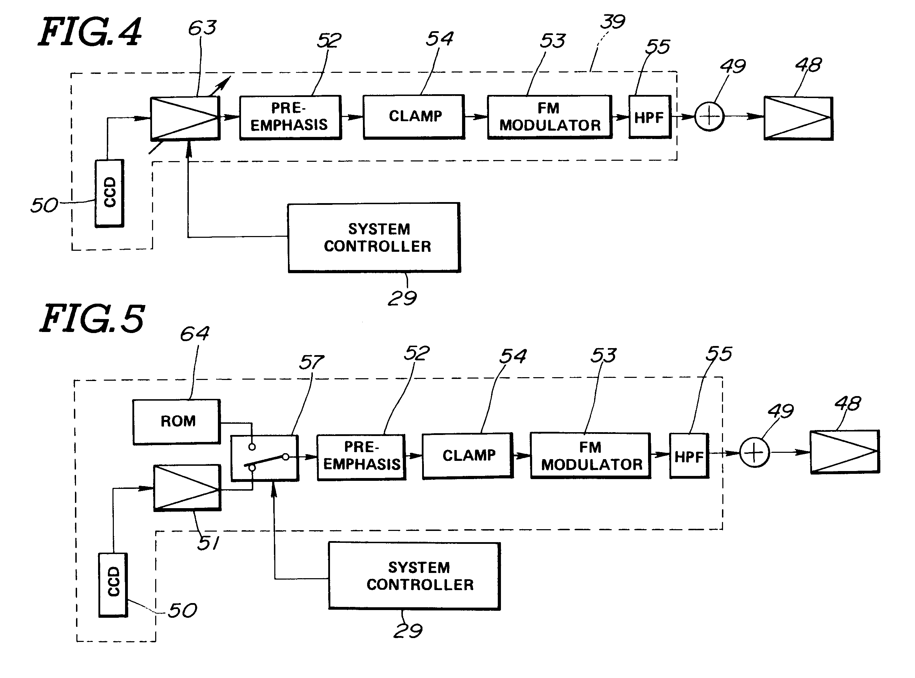

Figure 4 shows part of a composite camera apparatus according to a second embodiment of the invention. Since most components of the second embodiment are common to the above-described first embodiment, only a portion which is different from the first embodiment is shown in and described with reference to Figure 4.

The second embodiment comprises a gain controlled amplifier 63 disposed between the CCD image pick-up device and the pre-emphasis circuit 52, the amplifier 63 replacing the dummy signal source of the first embodiment.

The idea of the second embodiment is to lower the gain in response to stroboscopic flashing so as to make unnoticeable smearing or blooming of the video image picked up upon the occurrence of stroboscopic flashing. In the video image pick-up when stroboscopic flashing occurs, excessive light intensity causes an excessively high luminance level of the video signal which causes smearing or blooming. Therefore, by lowering the luminance level of the video signal to be reproduced, the smeared or bloomed image may become unnoticeable or will not substantially degrade the reproduced image.

Therefore, in the second embodiment, the amplifier 63 lowers its gain in response to the strobe trigger signal of the system controller 29 of the still camera. The magnitude of the lowering of the gain may be set to lower the video signal level below the clip level so that the luminance level can be reduced sufficiently to make the reproduced image substantially dark.

In similar manner to the first embodiment, the amplifier 63 is triggered in response to the vertical synchronisation signal received subsequent to the strobe trigger signal of the system controller 29. In response to the vertical synchronisation signal, the gain is dropped to a predetermined magnitude for lowering the video signal level to a given magnitude. The amplifier 63 is held in the reduced-gain condition for a period corresponding to one field of the video image. The gain of the amplifier 63 is returned to its normal level at the time of occurrence of the next vertical synchronisation signal. Therefore, the second embodiment successfully avoids degradation of the reproduced image quality by making the luminance level of the image picked-up upon stroboscopic flashing unnoticeable.

Figure 5 shows part of a composite camera circuit according to a third embodiment of the invention. In this embodiment, a read only memory (ROM) 64 which stores a preset dummy signal of a sufficiently low luminance level is employed in place of the dummy signal generator source of the first embodiment. Also, as shown, an amplifier 51 may be connected between the CCD image pick-up device 50 and the changeover switch 57.

The ROM 64 is connected to the remainder of the video signal processing circuit 39 via the switch 57 which, in turn, is connected to the CCD image pick-up device 50. The switch 57 is operated in substantially the same manner as described with reference to the first embodiment. Thus, a connection between the ROM 64 and the remainder of the circuit 39 is established in response to the strobe trigger signal and is maintained for a period corresponding to the one field of the video signal. Therefore, the dummy signal stored in the ROM 64 is recorded in place of one field of the video signal of the video image picked-up when stroboscopic flashing is taking place so as to avoid degradation of the video image when reproduced on a video monitor.

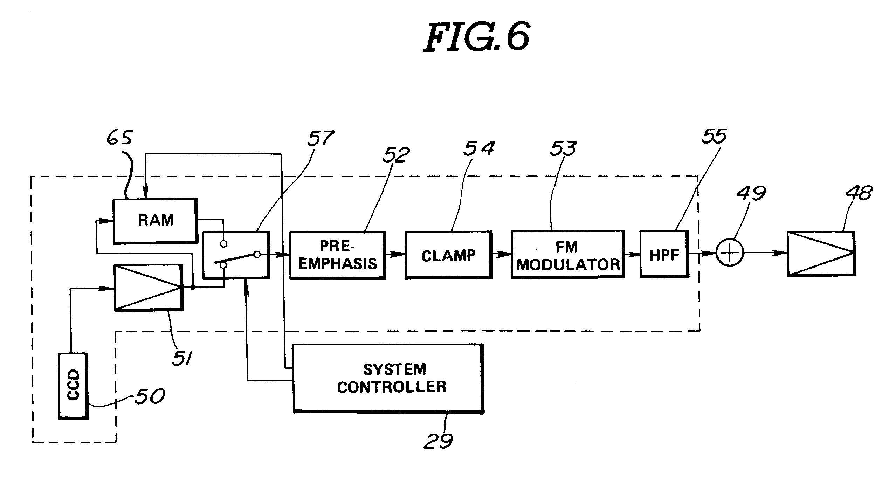

Figure 6 shows part of a composite camera circuit according to a fourth embodiment of the invention. In the fourth embodiment, a random access memory (RAM) 65 is employed in place of the ROM 64 of the third embodiment. The RAM 65 is connected to the amplifier 51 so as continuously to receive the video signal. The RAM 65 is designed for storing one field of the video signal and to be updated with every one field of the video signal.

The RAM 65 is connected to the remainder of the video signal processing circuit 39 via the change-over switch 57 which is disposed between the CCD image pick-up device 50 and the remainder of the circuit 39. The switch 57 is operated as described with reference to the first embodiment to selectively connect one of the CCD image pick-up device 50 and RAM 65 to the remainder of the circuit 39. Therefore, when stroboscopic flashing takes place, the connection between the device 50 and the remainder of the circuit 39 is broken and a connection between the RAM 65 and the remainder of the circuit 39 is established. At this time, since the RAM 65 stores the video signal of that field preceding the field of the video signal containing smeared or bloomed image data, that preceding field is fed to the remainder of the circuit 39 instead of the smeared or bloomed field. Thus, degradation of the reproduced image due to presence of a smeared or bloomed field can be avoided.

As will be appreciated, the above-described embodiments of the present invention avoid degradation of the reproduced video image which might otherwise be caused by simultaneous operation of the video camera and the still camera with the stroboscopic lamp.

Though specific embodiments have been described for facilitating full understanding of the invention, the invention may be embodied in other ways. For instance, it would be possible simply to disconnect the CCD image pick-up device from the remainder of the video signal processing circuit for the period corresponding to one field of the video signal upon stroboscopic flashing. Although this may make the video image reproduced on the video monitor discontinuous, it may not cause degradation of the reproduced image to an extent worse than that caused by reproduction of a smeared or bloomed field of the video signal. Therefore, the invention includes all possible embodiments which allow simultaneous operation of the video camera and the still camera with strobo-flashing without causing substantial degradation of the video image when reproduced on a video monitor.

## Claims

1. A composite camera apparatus comprising:
a video camera (39) for picking up a video image and producing therefrom a video signal comprising a plurality of fields;
a still camera (31) for picking up a still image for recording on a still image recording medium (21);
a flash device (32) cooperative with the still camera (31) for emitting a flash of high intensity light in response to operation of the still camera; and
data modifying means (56, 57; 63; 57, 64; 57, 65) incorporated in the video camera for modifying video image data in a field of the video signal picked up when the flash device (32) is operated so as to avoid the influence of high intensity flash light.

2. Apparatus according to claim 1, wherein the data modifying means (56, 57; 57, 64; 57, 65) is operative to replace said field of the video signal with a predetermined dummy signal.

3. Apparatus according to claim 2, wherein the data modifying means (57, 65) includes a memory (65) for storing the field of the video signal immediately preceding the field to be modified, and the predetermined dummy signal is the field of the video signal stored in the memory (65).

4. Apparatus according to claim 1, wherein the data modifying means (63) is operative to lower the gain of said one field of the video signal.

5. Apparatus according to any one of the preceding claims, wherein the video camera (39) includes means for recording the video signal.

6. Apparatus according to claim 5, wherein the video camera comprises means (50) for picking up the video image and producing therefrom a plurality of consecutive video signal fields and means (52 to 55) for processing the video signal, the recording means is operative to record the video signal on a video tape, and the data modifying means (56, 57; 63; 57, 64; 57, 65) is disposed between the video image pick-up means (50) and the video signal processing means (39).

7. Apparatus according to any one of the preceding claims, wherein the data modifying means (56, 57; 63; 57, 64; 57, 65) is active in synchronism with operation of the flash device (32) for modifying the video image data in the field picked-up when the flash device is operated.

## Patentansprüche

1. Kamerakombinationsgerät
mit einer Videokamera (39) zum Aufnehmen eines Videobildes und zur Erzeugung eines entsprechenden Videosignals mit einer Vielzahl von Halbbildem,
mit einer Standbildkamera (31) zum Aufnehmen eines Standbildes und zur Aufzeichnung des Standbildes auf einem Standbild-Aufzeichnungsmedium (21),
mit einer mit der Standbildkamera zusammenwirkenden Blitzlichtvorrichtung (32), die bei Betätigung der Standbildkamera ein Blitzlichts hoher Intensität aussendet,
sowie mit einer in die Videokamera integrierten Datenmodifizierungseinrichtung (56, 57; 63; 57, 64; 57, 65), mittels derer Videobilddaten in einem während der Betätigung der Blitzlichtvorrichtung (32) aufgenommenen Halbbild des Videosignals modifizierbar sind, um eine Beeinflussung durch das Blitzlicht hoher Intensität zu vermeiden.

2. Gerät nach Anspruch 1, bei dem die Datenmodifizierungseinrichtung (56, 57; 63; 57, 64; 57, 65) das genannte Halbbild des Videosignals durch ein vorbestimmtes Blindsignal ersetzt.

3. Gerät nach Anspruch 2, bei dem die Datenmodifizierungseinrichtung (57, 65) einen Speicher (65) zur Speicherung des dem zu modifizierenden Halbbildes unmittelbar vorausgehenden Halbbildes des Videosignals aufweist und bei dem das vorbestimmte Blindsignal das in dem Speicher (65) gespeicherte Halbbild des Videosignals ist.

4. Gerät nach Anspruch 1, bei dem die Datenmodifizierungseinrichtung (63) den Verstärkungsgrad des einen Halbbildes des Videosignals herabsetzt.

5. Gerät nach einem der vorhergehenden Ansprüche, bei dem die Videokamera (3) eine Aufzeichnungseinrichtung zum Aufzeichnen des Videosignal aufweist.

6. Gerät nach Anspruch 5, bei dem die Videokamera eine Einrichtung (50) aufweist zum Aufnehmen des Videobildes und zum Erzeugen einer Vielzahl von aufeinanderfolgenden Halbbild-Videosignalen aus dem aufgenommenen Videobild sowie eine Einrichtung (52 bis 55) zur Verarbeitung des Videosignals, wobei die Aufzeichnungseinrichtung das Video-Signal auf einem Videoband aufzeichnet und die Datenmodifizierungseinrichtung (56, 57; 63; 57, 64; 57, 65) zwischen der Videobild-Aufnahmevorrichtung (50) und der Videosignal-Verarbeitungseinrichtung (39) angeordnet ist.

7. Gerät nach einem der vorhergehenden Ansprüche, bei dem die Datenmodifizierungseinrichtung (56, 57; 63; 57, 64; 57, 65) synchron mit der Betätigung der Blitzlichtvorrichtung (32) wirksam wird, um die Videobilddaten in dem Halbbild zu modifizieren, das bei der Betätigung der Blitzlichtvorrichtung aufgenommen wird.

## Revendications

1. Appareil de prise de vues composé, comprenant :
un appareil de prise de vues animées, ou caméra vidéo, (39) destiné à capter une image vidéo et à produire à partir de celle-ci un signal vidéo comprenant plusieurs trames;
un appareil de prise de vues fixes, ou appareil photographique, (31), servant à capter une image fixe à fin de l'enregistrer sur un support (21) d'enregistrement d'images fixes;
un dispositif faisant fonction de lampe-éclair, ou flash, (32), qui coopère avec l'appareil photographique (31) pour émettre un éclair de haute intensité lumineuse en réponse à l'actionnement de l'appareil photographique ; et
un moyen (56, 57 ; 63 ; 57, 64 ; 57, 65) de modification de données, qui est incorporé dans la caméra vidéo afin de modifier les données d'image vidéo contenues dans une trame du signal vidéo capté lorsque le dispositif faisant fonction de lampe-éclair (32) est actionné de façon à éviter l'influence de la haute intensité lumineuse de l'éclair.

2. Appareil selon la revendication 1, où le moyen de modification de données (56, 57 ; 57, 64 ; 57, 65) a pour fonction de remplacer ladite trame du signal vidéo par un signal fictif prédéterminé.

3. Appareil selon la revendication 2, où le moyen de modification de données (57, 65) comporte une mémoire (65) servant à emmagasiner la trame du signal vidéo qui précède immédiatement la trame à modifier, et le signal fictif prédéterminé est la trame du signal vidéo emmagasiné dans la mémoire (65).

4. Appareil selon la revendication 1, où le moyen de modification de données (63) a pour fonction d'abaisser le gain de ladite trame, première citée, du signal vidéo.

5. Appareil selon l'une quelconque des revendications précédentes, où la caméra vidéo (39) comporte un moyen servant à enregistrer le signal vidéo.

6. Appareil selon la revendication 5, où la caméra vidéo comprend un moyen (50) servant à capter l'image vidéo et à reproduire à partir de celle-ci plusieurs trames de signal vidéo consécutives et un moyen (52 à 55) servant à traiter le signal vidéo, le moyen d'enregistrement a pour fonction d'enregistrer le signal vidéo sur une bande vidéo, et le moyen de modification de données (56, 57; 63 ; 57, 64 ; 57, 65) est disposé entre le moyen capteur d'image vidéo (50) et le moyen de traitement de signal vidéo (39).

7. Appareil selon l'une quelconque des revendications précédentes, où le moyen de modification de donnée (56, 57 ; 63 ; 57, 64 ; 57, 65) est actif en synchronisme avec l'actionnement du dispositif faisant fonction de lampe-éclair (32) de façon à modifier les données d'image vidéo contenues dans la trame captée lorsque le dispositif faisant fonction de lampe-éclair est actionné.
